# EUROPÄISCHE PATENTANMELDUNG

(11) **EP 0 654 892 A1**
(43) Veröffentlichungstag der Anmeldung: **24.05.1995**
(21) Anmeldenummer: 93810805.7
(22) Anmeldetag: 19.11.1993
(51) Int. Cl.: H02P 8/00, H02P 8/34

(54) **Verfahren zur Schrittmotorsteuerung**

(71) Anmelder: SAIA AG, CH-3280 Murten (CH)
(72) Erfinder: Boillat, Pierre, CH-3280 Meyriez (CH)
(74) Vertreter: AMMANN PATENTANWAELTE AG BERN

(57) **Zusammenfassung**

Dem Schrittmotor (1) ist ein Mikroprozessor (5) oder eine äquivalente Schaltung zugeordnet, welcher über eine Steuerleitung (9) und über einen Analog-Digital-Wandler (6) mittels eines analogen Steuersignals angesteuert wird, um seinerseits über eine Leistungselektronik (4) den Schrittmotor (1) zu steuern. Ueber eine Leitung (11) und die Steuerleitung (9) können Rückmeldungen in digitaler Form übertragen werden. Der Mikroprozessor (5) erfüllt dabei verschiedenste Ueberwachungs- und Steueraufgaben, beispielsweise die Erfassung von Schrittverlusten, die Regelung des Drehmomentes, die Kompensation von Instabilitäten des Schrittmotors (1) und die Regelung der Motorposition. Als Steuerorgan kann im einfachsten Fall ein Potentiometer (10) dienen, und trotzdem ist eine sehr vielseitige Steuerung und Ueberwachung des Schrittmotors möglich.

## Beschreibung

Die vorliegende Erfindung betrifft ein Verfahren zur Schrittmotorsteuerung, wobei dem Schrittmotor eine Steuerelektronik zugeordnet ist, die über eine Steuerleitung ansteuerbar ist. Ein Hauptvorteil von Schrittmotoren besteht darin, dass sie eine genaue Positionierung von Maschinenelementen und Vorrichtungsteilen erlauben. Nachteilig wirkt sich die Notwendigkeit aus, zur Ansteuerung der Schrittmotoren eine Elektronik vorzusehen, welche die erforderliche Logik und Leistungsverstärkung zur Signalverarbeitung für entsprechend komplizierte Funktionen aufweist.

Ein Ziel vorliegender Erfindung besteht darin, mit einer besonders einfachen Steuereinheit auszukommen und damit dem Anwender den Einsatz von Schrittmotoren wesentlich zu erleichtern. Dieses Ziel wird dadurch erreicht, dass ein analoges Steuersignal zugeführt wird. Das Steuersignal kann also im einfachsten Falle durch ein Potentiometer erzeugt werden, und jeder Motor kann über drei Leiter angesteuert werden, von welchen der eine zur Uebermittlung des Steuersignals und die beiden anderen der Energiezufuhr zum Motor und der ihm zugeordneten Elektronik dienen. Die Ansteuerung des Motors mit einem analogen Signal ist auch deshalb möglich, weil die Ueberwachung des Motors lokal durch die ihm zugeordnete Steuerelektronik erfolgen kann, indem mehrere Parameter überwacht werden, beispielsweise der Verlust elektromechanischer Zyklen, im folgenden vereinfacht "Schrittverlust" genannt, die Konstanthaltung des Motordrehmoments, die dynamische Stabilisierung, die Positionskontrolle und die Ueberwachung auf zu hohe oder zu niedrige Betriebsspannung.

Ein weiteres Ziel der Erfindung besteht darin, durch eine ganz besondere Steuerung der dem Motor zugeführten Antriebsimpulse Ueberwachungsfunktionen zu kombinieren. Dieses Ziel wird gemäss Anspruch 6 erreicht.

Die Erfindung wird nun anhand eines Ausführungsbeispiels näher erläutert.
Fig. 1 zeigt ein Blockschema eines Motors und seiner Steuerschaltung,
Fig. 2 ist ein Diagramm zur Erläuterung der den Motorwicklungen zugeführten Spannungsimpulse und
Fig. 3 zeigt ein Flussdiagramm zur Erläuterung des Mikroprozessors der dem Motor zugeordneten Steuerelektronik.

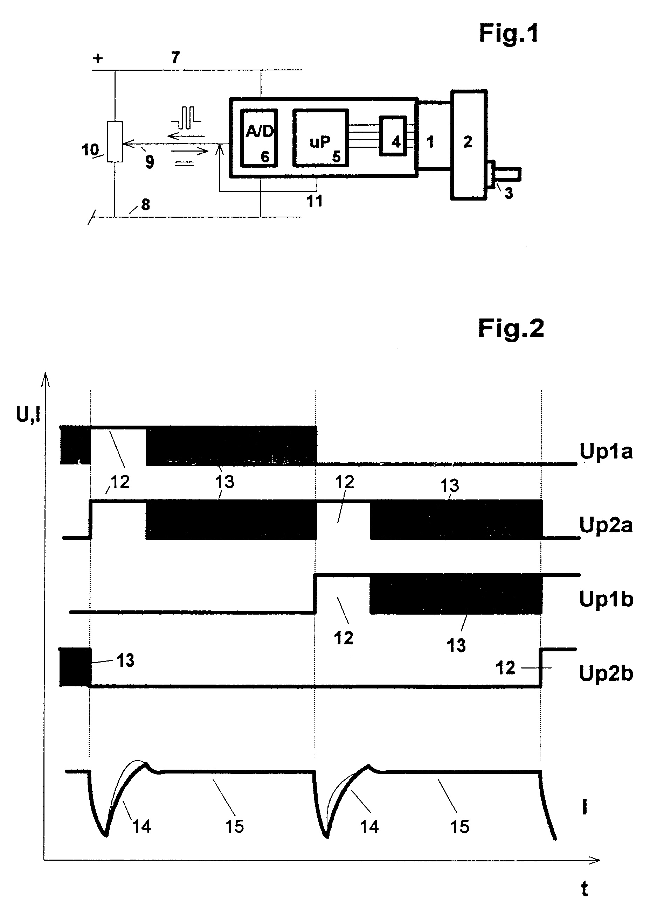

Fig. 1 zeigt schematisch einen Schrittmotor 1 der mit einem Reduktionsgetriebe 2 verbunden ist, dessen Welle 3 dem Antrieb eines Gerätes oder aber eines Organs, beispielsweise einer Klappe eines Belüftungssystems dient. Dem Motor 1 ist eine Leistungselektronik 4 zugeordnet, welche den Motorwicklungen die nötigen Antriebsimpulse zuführt. Angesteuert wird die Leistungseleketronik 4 durch Ausgänge eines Mikroprozessors 5. Dieser Mikroprozessor 5 umfasst einen Analog-Digital-Wandler 6. Die Teile 4, 5 und 6 der Elektronik werden über zwei Leitungen 7 und 8 mit Strom versorgt. Diese Teile der Elektronik können gemeinsam integriert sein. Ein Eingang des Analog-Digital-Wandlers 6 ist über eine Steuerleitung 9 mit dem Abgriff eines Potentiometers 10 verbunden. Ueber eine weitere Leitung 11, welche den Analog-Digital-Wandler 6 überbrückt, können über die Leitung 9 Rückmeldungen in digitaler Form übertragen werden, in Fig. 1 durch Impulse angedeutet.

Im Betrieb wird dem Analog-Digital-Wandler 6 über die Steuerleitung 9 eine Analogspannung zugeführt, welche der Position des Abgriffs am Potentiometer 10 bzw. der Potentiometerstellung entspricht. Der Analog-Digital-Wandler 6 ist vorzugsweise so ausgestaltet, dass an seinem Ausgang eine Information erscheint, welche dem Verhältnis zwischen der Betriebsspannung auf den Leitungen 7 und 8 und der Spannung auf der Steuerleitung 9 entspricht. Dieses Verhältnis ist von der Betriebsspannung unabhängig, so dass sich die Schaltung ganz speziell eignet für Anwendungen wo die Batteriespannung grossen Schwankungen unterworfen ist. Das entsprechende Steuersignal wird in digitaler Form dem Mikroprozessor 5 zugeführt, welcher entsprechende Steuersignale dem Schrittmotor 1 bzw. seiner Leistungselektronik 4 zuführt. Im allgmeinen wird das Steuersignal auf der Steuerleitung 9 massgebend sein für die Positionierung eines Organs, d. h. der Mikroprozessor vergleicht Informationen betreffend die Sollposition und die Istposition und steuert den Schrittmotor 1 entsprechend an, um die Sollposition entsprechend dem Steuersignal auf der Leitung 9 zu erreichen.

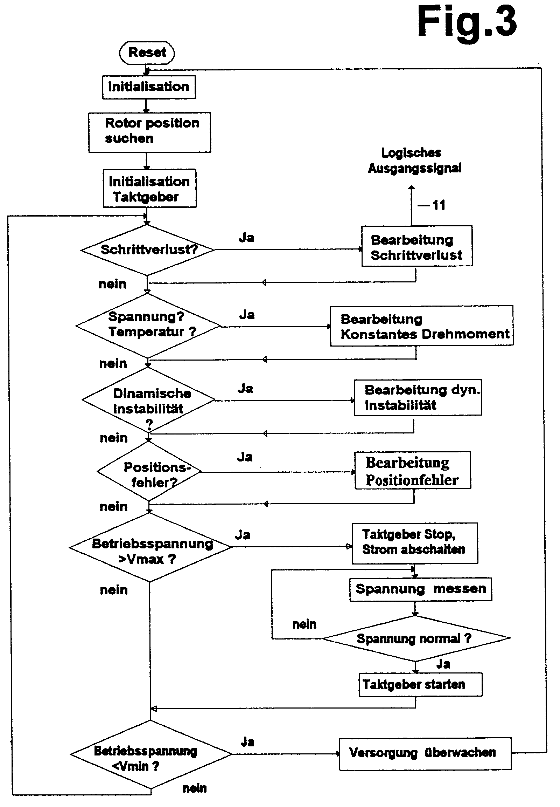

Fig. 3 zeigt ein Beispiel der durch den Mikroprozessor ausgeführten Steuer- und Ueberwachungsfunktionen. Demgemäss wird zuerst festgestellt, ob ein Schrittverlust eingetreten sei, dann wird die Betriebsspannung erfasst und gegebenenfalls auch die Wicklungstemperatur des Motors, und es werden in später noch beschriebener Weise die Motorimpulse zur Konstanthaltung des Drehmoments angepasst. Dann wird die Stabilität des Motors überprüft, und es werden Massnahmen zur Kompensation eventueller Instabilitäten, insbesondere der Motordrehung überlagerte Oszillationen festgestellt. Dann wird die Istposition mit der Sollposition verglichen, und der Motor wird entsprechend angesteuert, um die Sollposition zu erreichen. Schliesslich wird noch festgestellt, ob die Betriebsspannung über einem zulässigen Maximum oder unter einem zulässigen Minimum liege, und es werden entsprechende Massnahmen eingeleitet.

Die Erfindung betrifft besondere kombinierte Massnahmen zur Erfassung von Schrittverlusten und zur Regelung des Motors, bzw. der Antriebsimpulse zur Erzielung eines konstanten Drehmomentes. Gemäss Fig. 2 werden zu diesem Zwecke die Antriebsimpulse aufgeteilt in je einen Anfangsimpuls 12 bestimmter Dauer und anschliessend Chopperimpulse 13 während einer bestimmten Dauer. Dieselbe Steuerung erfolgt für alle Impulse der beiden Motorphasen Up1a, Up1b und Up2a, Up2b. Während der Anfangsimpulse 12 gegebener Dauer erfolgt in den Motorwicklungen ein Stromanstieg 14, und aus dem Verlauf dieses Stromanstiegs wird in an sich bekannter Weise (CH-A-680 547) darauf geschlossen, ob der Schrittmotor den Schritt ausführt oder nicht. Im weiteren Verlauf des Impulses pendelt sich der Strom auf einen etwa konstanten Wert ein, und die Dauer des choppergesteuerten Impulses 13 bzw. des dabei fliessenden Stromes 15 wird so geregelt, dass der Motor ein annähernd konstantes Drehmoment entwickelt. Auch diese Regelung in Abhängigkeit der Betriebsspannung, eventuell zusätzlich in Abhängigkeit von der Temperatur der Motorwicklungen ist an sich bekannt aus der EP-A-0 461 066. Die Dauer des choppergesteuerten Anteils 13 des Antriebsimpulses kann ausserdem geregelt werden, um Instabilitäten des Motors, insbesondere parametrische Resonanzen, zu dämpfen bzw. zu kompensieren. Mit dieser Art der kombinierten Impulssteuerung können somit bis zu drei Parametern überwacht und geregelt werden.

Es sind verschiedene Varianten des Vorgehens möglich. Es könnten beispielsweise mehr Leitungen vorgesehen sein, um logische Informationen vom Motor zurückzuübertragen. Es wäre auch möglich, anstelle eines Mikroprozessors eine anwendungsspezifische integrierte Schaltung (ASIC) zu verwenden. Sofern ohnehin ein Mikroprozessor vorhanden ist, kann dieser Mikroprozessor dazu herangezogen werden, Rückmeldungen in digitaler oder analoger Form, z. B. als HF-Signal, zu empfangen und zu verarbeiten. In diesem Fall kann z. B. eine Rückmeldung über Schrittverluste erfolgen, und der ohnehin vorhandene zentrale Mikroprozessor kann automatisch oder nach Intervention durch eine Bedienungsperson Korrekturen vornehmen, wobei digitale Korrekturbefehle zur Uebertragung in analoge gewandelt werden können. Im allgemeinen ist jedoch vorgesehen, dass der lokale, dem Motor zugeordnete Mikroprozessor 5 die Ueberwachungs- und eventuellen Korrekturfunktionen übernimmt, indem er z. B. Schrittverluste erfasst und spätestens nach einer gewissen Anzahl von Schrittverlusten eine Korrektur vornimmt, die dadurch erfolgen kann, dass der Motor gegen einen Anschlag in eine Endstellung gebracht wird, aus welcher dann eine Neueinstellung in die Sollposition erfolgt.

## Patentansprüche

1. Verfahren zur Schrittmotorensteuerung, wobei dem Schrittmotor eine Steuerelektronik zugeordnet ist, die über eine Steuerleitung ansteuerbar ist, dadurch gekennzeichnet, dass ein analoges Steuersignal zugeführt wird.

2. Verfahren nach Anspruch 1, dadurch gekennzeichnet, dass die Motorenfunktion durch die Steuerelektronik überwacht wird.

3. Verfahren nach Anspruch 1 oder 2, dadurch gekennzeichnet, dass eine dem Steuersignal entsprechende Positionierung eines Vorrichtungsteils erfolgt.

4. Verfahren nach einem der Ansprüche 1 - 3, dadurch gekennzeichnet, dass das Steuersignal in eine digitale Information gewandelt und einer digitalen Elektronik, z. B. einem Mikroprozessor zugeführt wird.

5. Verfahren nach einem der Ansprüche 1 - 4, dadurch gekennzeichnet, dass Informationen in digitaler oder analoger Form von der Steuerelektronik über die Steuerleitung oder mindestens eine zusätzliche Leitung zurückübertragen werden.

6. Verfahren nach einem der Ansprüche 1 - 5, dadurch gekennzeichnet, dass das Steuersignal an einem Potentiometer abgegriffen wird und als Steuersignal das Spannunsteilerverhältnis dient, welches in einem A/D-Wandler digitalisiert werden kann.

7. Verfahren, insbesondere nach einem der Ansprüche 1 - 6, wobei der Schrittmotor auf Schrittverluste überwacht und auf konstantes Drehmoment unter Schwankungen der Betriebsspannung geregelt wird, dadurch gekennzeichnet, dass die Antriebsimpulse in einen Anfangsimpuls bestimmter Dauer und Chopper-Impulse während einer in Abhängigkeit von der Betriebsspannung variablen Dauer zerlegt werden, wobei aus dem Verlauf des Anstiegs des Motorstroms während des Anfangsimpulses auf die Ausführung bzw. den Verlust eines Schrittes geschlossen wird.

8. Verfahren nach Anspruch 7, dadurch gekennzeichnet, dass die Dauer der Chopper-Impulse auch in Abhängigkeit von der Motortemperatur bzw. Wicklungstemperatur geregelt wird.

9. Verfahren nach Anspruch 7 oder 8, dadurch gekennzeichnet, dass mittels der Impulsdauer auch die dynamische Stabilität des Schrittmotors geregelt wird.

10. Verfahren nach einem der Ansprüche 1 - 9, dadurch gekennzeichnet, dass das Steuersignal mit einer Positionsrückmeldung verglichen wird um die Sollposition anzusteuern.

11. Verfahren nach einem der Ansprüche 1 - 10, dadurch gekennzeichnet, dass eine Ueberwachung des oberen oder unteren Grenzwertes der Betriebsspannung erfolgt.

## Geänderte Patentansprüche

### Geänderte Patentansprüche gemäss Regel 86(2) EPÜ.

Verfahren zur Schrittmotorensteuerung, wobei dem Schrittmotor eine Steuerelektronik zugeordnet ist, die über eine Steuerleitung ansteuerbar ist, dadurch gekennzeichnet, dass ein Steuersignal zugeführt wird, und dass die Motorenfunktion durch eine lokale, dem Motor zugeordnete Steuerelektronik überwacht wird.

Verfahren nach Anspruch 1, dadurch gekennzeichnet, dass eine dem Steuersignal entsprechende Positionierung eines Vorrichtungsteils erfolgt.

Verfahren nach einem der Ansprüche 1 oder 2, dadurch gekennzeichnet, dass das analoge Steuersignal in eine digitale Information gewandelt und einer digitalen Elektronik, z. B. einem Mikroprozessor zugeführt wird.

Verfahren nach einem der Ansprüche 1 - 3, dadurch gekennzeichnet, dass Informationen in digitaler oder analoger Form von der Steuerelektronik über die Steuerleitung oder mindestens eine zusätzliche Leitung zurückübertragen werden.

Verfahren nach einem der Ansprüche 1 - 4, dadurch gekennzeichnet, dass das Steuersignal an einem Potentiometer abgegriffen wird und als Steuersignal das Spannunsteilerverhältnis dient, welches in einem A/D-Wandler digitalisiert werden kann.

Verfahren, insbesondere nach einem der Ansprüche 1 - 5, wobei der Schrittmotor auf Schrittverluste überwacht und auf konstantes Drehmoment unter Schwankungen der Betriebsspannung geregelt wird, dadurch gekennzeichnet, dass die Antriebsimpulse in einen Anfangsimpuls bestimmter Dauer und Chopper-Impulse während einer in Abhängigkeit von der Betriebsspannung variablen Dauer zerlegt werden, wobei aus dem Verlauf des Anstiegs des Motorstroms während des Anfangsimpulses auf die Ausführung bzw. den Verlust eines Schrittes geschlossen wird.

Verfahren nach Anspruch 6, dadurch gekennzeichnet, dass die Dauer der Chopper-Impulse auch in Abhängigkeit von der Motortemperatur bzw. Wicklungstemperatur geregelt wird.

Verfahren nach Anspruch 6 oder 7, dadurch gekennzeichnet, dass mittels der Impulsdauer auch die dynamische Stabilität des Schrittmotors geregelt wird.

Verfahren nach einem der Ansprüche 1 - 8, dadurch gekennzeichnet, dass das Steuersignal mit einer Positionsrückmeldung verglichen wird um die Sollposition anzusteuern.

Verfahren nach einem der Ansprüche 1 - 9, dadurch gekennzeichnet, dass eine Ueberwachung des oberen oder unteren Grenzwertes der Betriebsspannung erfolgt.
